# EUROPEAN PATENT SPECIFICATION

(11) **EP 1 576 598 B1**
(45) Date of publication and mention of the grant of the patent: **22.10.2008**
(21) Application number: 03813198.3
(22) Date of filing: 14.11.2003
(51) Int. Cl.: G11B 7/22, G11B 7/135, G02B 7/02

(54) **OPTICAL LENS ASSEMBLY**
OPTISCHE LINSENBAUGRUPPE
ENSEMBLE LENTILLES OPTIQUES

(30) Priority: 16.12.2002 EP 02080312
(43) Date of publication of application: 21.09.2005
(73) Proprietor: Koninklijke Philips Electronics N.V., 5621 BA Eindhoven (NL)
(72) Inventor: HENDRIKS, Bernardus, H., W., NL-5656 AA Eindhoven (NL); VAN AS, Marco, A., J., NL-5656 AA Eindhoven (NL); VAN GAAL, Fransiscus, M., A., M., NL-5656 AA Eindhoven (NL); VAN DER VLEUTEN, Cornelius, A., N., M., NL-5656 AA Eindhoven (NL)
(74) Representative: van Oudheusden-Perset, Laure E.
(86) International application number: PCT/IB2003/005172
(87) International publication number: WO 2004/055796

(56) References cited:
- WO-A-02/086876
- US-A- 5 612 826
- US-B1- 6 449 221

## Description

The present invention relates to an optical lens assembly, particularly but not exclusively one which is suitable for use within an optical scanning device for scanning an optical record carrier, and to methods of assembling lens elements.

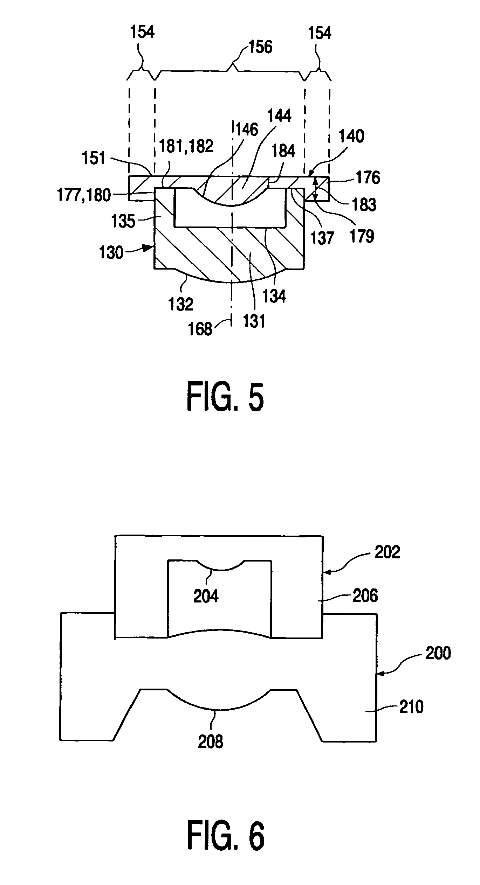

Fig. 6 shows a configuration of a known optical lens assembly used as an objective lens in optical drives, including a first lens set element 200 and a second lens set element 202. The first lens set element 200 includes a relatively large lens 208 and an outer flange 210. The second lens set element 202 includes a relatively small lens 204 and an annular protrusion 206 which fits into the outer flange 210 of the first element.

US patent application 2002/0036839 A1 describes an optical system having an objective lens comprising two optical lenses aligned with each other. Each of the first and second lenses has coinciding outer circumferences to aid alignment of the first and second lenses during assembly.

A recently developed new optical record carrier is termed a Small Form Factor Optical (SFFO) disc which may have a diameter of for example 3 cm. With the use of a blue laser, with a wavelength of for example 405nm, SFFO discs can hold some 1 Gbyte of data. Its small size allows an SFFO drive (for example with dimensions of 4.6 x 3.4 x 0.75cm³) to be incorporated in portable electronic devices such as digital cameras, mobile phones, PDAs and portable Internet devices. However, such miniaturization poses new technological problems for the design, structure and the manufacturing of these scanning devices.

One such technological problem involves the assembly of a two-element objective lens component for use within a blue laser SFFO scanning device. One lens element may have an entrance pupil less than 2mm in diameter, whilst the other may have an entrance pupil of less than 1mm in diameter, which makes handling and manipulating during manufacturing processes difficult. During these manufacturing processes it is desirable that faces of the objective lenses, which may have a lens coating, are not touched and that the two objective lenses are correctly aligned, spaced and angled to each other.

During miniaturization of a two-element lens assembly to produce an SFFO objective lens, it was found that the smaller lens element became so small as to be difficult to manipulate reliably, and furthermore that propagation of stress to the lens during handling caused unwanted birefringence effects due to warping of the lens.

WO 02 086876, against which claim 1 is delimited, discloses an optical two-lens system in which a lens holder and the smaller lens are manufactured as an integrated part. The width of the integrated structure is greater than the width of the other lens.

It is an object of the present invention to provide a miniaturized optical lens assembly which can be efficiently and accurately assembled whilst reducing unwanted birefringence in the assembled components.

In accordance with an aspect of the present invention, there is provided an optical lens set according to claim 1.

Whilst the first lens element, by virtue of having a lens of greater diameter, has in the prior art been arranged as the element having a greater or equal width, in the present invention the second lens element is arranged to have an outer part with a greater width, to provide the advantages described above, and since the removable part of the outer part of the second lens set element may be detached following the assembly process the size of the finished optical lens assembly can be reduced.

According to a separate aspect of the invention, there is provided a method of handling a lens element for use in an optical lens assembly, the lens element including an inner part, including a lens having a curved lens surface, and an outer part, including a removable part, the method comprising the steps of:
a) handling the assembly element to apply handling forces to said removable part; and
b) removing said removable part before completing said lens assembly.

Thus, this aspect provides an improved method of handling a lens element, in particular a miniaturized lens element, during a handling process before completion of assembly of the lens element, for example to pick up or hold the lens element by handling the removable part during a coating process and/or during an assembly process.

Further aspects of the invention are set out in the appended claims, and features and advantages of the present invention will become apparent from the following description of preferred embodiments of the invention, which is given by way of example only, made with reference to the accompanying drawings.
Fig. 1 shows a schematic diagram of an optical scanning device including an optical lens assembly according to an embodiment of the present invention;
Fig. 2a shows a cross-section of a first lens set element, prior to assembly thereof, according to an embodiment of the present invention;
Fig. 2b shows a cross-section of a second lens set element, prior to assembly thereof, according to an embodiment of the present invention;
Fig. 3 shows a cross-section of an optical lens assembly formed from the elements shown in Figs. 2a and 2b;
Fig. 4 shows a cross-section of the optical lens assembly shown in Fig. 3 following detachment of a removable part;
Fig. 5 shows a cross-section of an alternative optical lens assembly; and
Fig. 6 shows a cross-section of an optical lens assembly in accordance with the prior art.

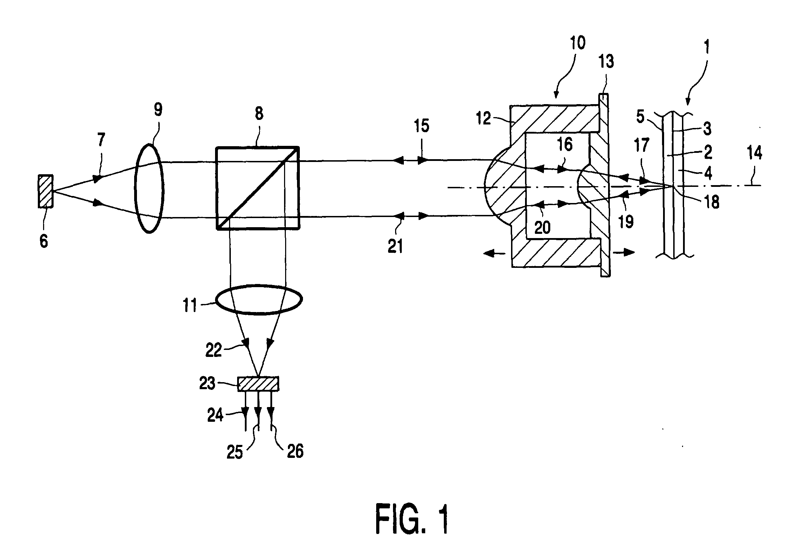

Fig. 1 shows a schematic diagram of an optical scanning device according to an embodiment of the present invention, which is for scanning an optical disc. The optical disc 1 comprises a transparent layer 2, on one side of which at least one information layer 3 is arranged. In the case of a multi-layer optical disc, two or more information layers are arranged behind the transparent layer 2, at different depths within the disc. The side of the information layer facing away from the transparent layer is protected from environmental influences by a protection layer 4. The side of the transparent layer facing the device is the disc entrance face 5. The transparent layer 2 acts as a substrate for the optical disc by providing mechanical support for the information layer or layers. Alternatively, the transparent layer 2 may have the sole function of protecting the information layer 3, in the case of a multi-layer optical disc the uppermost information layer, while the mechanical support is provided by a layer on the other side of the information layer, for instance by the protection layer 4 or by a further information layer and transparent layer connected to the uppermost information layer.

Information may be stored in the information layer 3 of the optical disc in the form of optically detectable marks arranged in substantially parallel, concentric or spiral tracks, not indicated in Fig. 1. The marks may be in any optically readable form, e.g. in the form of pits, or areas with a reflection coefficient or a direction of magnetization different from their surroundings, or a combination of these forms.

The optical scanning device includes a radiation source 6, for example a semiconductor laser, emitting a diverging radiation beam 7 having a predetermined wavelength, for example 405nm. A beam splitter 8, for example a semi-transparent plate, reflects the radiation towards a lens system. The lens system includes a collimator lens 9, an optical lens assembly 10 and a condenser lens 11. An optical lens assembly 10 includes a first lens set element 12 attached to a second lens set element 13. The optical lens assembly 10 has an optical axis 14. A detailed description of an embodiment of the optical lens assembly 10 follows shortly.

The collimator lens 9 transforms the diverging radiation beam 7 to a collimated beam 15. A lens in the first lens set element 12 transforms the collimated radiation beam 15 lying along the optical axis 14 into a converging beam 16 having an intermediate numerical aperture (NA), and incident on the second lens set element 13. A lens in the second lens set element 13 transforms the incident beam 16 into a converging beam 17, having a relatively high NA, in this embodiment 0.85, which comes to a spot 18 on the information layer 3.

Radiation of the converging beam 17 reflected by the information layer 3 forms a diverging reflected beam 19, which returns on the optical path of the forward converging beam 17. The lenses of the two lens set elements of the optical lens assembly 10 transform the reflected beam 19 first to a less divergent beam 20, then to a substantially collimated reflected beam 21, and the beam splitter 8 separates the forward and reflected beams by transmitting at least part of the reflected beam 21 towards the condenser lens 11.

The condenser lens transforms the incident beam into a convergent reflected beam 22 focused on a detection system 23. The detection system captures the radiation and converts it into electrical signals. One of these signals is an information signal 24, the value of which represents the information read from the information layer 3, another is a focus error signal 25, the value of which represents the axial difference in height between the spot 18 and the information layer 3, and another signal is a tracking error signal 26, which represents a deviation from the center of a track in the information layer 3 being scanned.

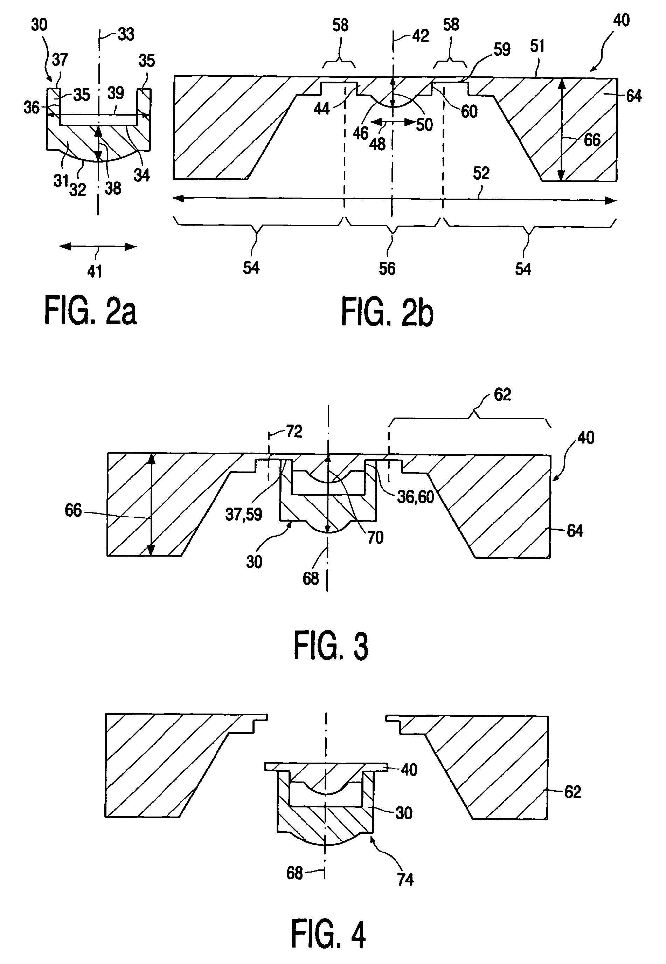

Figs. 2a, 2b, 3 and 4 show lens set elements at different stages of a lens assembly process. Referring now to Fig. 2a, a first lens set element 30 has a lens 31 with a first face having a curved lens surface 32. The first lens set element 30 has a first optical axis 33 about which the lens 31 is centered. The lens 31 has a thickness 38 between the curved lens surface 32 and a second face 34 of the lens, the thickness being taken along the first optical axis 33. The lens 31 has an entrance pupil with a first diameter 41 which in this embodiment is less than 2mm. Before assembly, and after molding of the first lens set element 30 from a plastics material, one or both of the lens faces are coated with one or more layers, for example of an anti-reflection coating. The second face 34 includes an annular protrusion 35 centered about the optical axis 33. The annular protrusion 35 has a cylindrical alignment reference surface 36 lying parallel to and concentric with the first optical axis 33 and a flat spacing reference surface 37 lying perpendicular to the first optical axis 33 at a specified distance from the second face 34. The first lens set element is circular at its periphery, in cross-section (not shown) perpendicular to the optical axis 33, and is of a given first width 39 taken in a direction perpendicular to the first optical axis 33.

Referring now to Fig. 2b, a second lens set element 40 has a second optical axis 42 and a first face, at the center of which is a lens 44 with a curved lens surface 46 centered about the second optical axis 42. The lens 44 has an entrance pupil with a second diameter 48 which is less than the first diameter 41, and in this embodiment less than 1mm. The second diameter may be at least 20% less, more typically at lest 50% less than the first diameter 41. Before assembly, and after molding of the second lens set element 40 from a plastics material, one or both of the lens faces are coated with one or more layers, for example of an anti-reflection coating.

The lens 44 of the second lens set element has a thickness 50 between the curved lens surface 46 and a planar second face 51 of the second lens set element 40, the thickness 50 being taken along the optical axis 42. A ratio of the thickness 50 of the lens 44 of the second lens set element 40 divided by the second diameter 48 is preferably greater than 0.5, and preferably greater than 0.75, in order to ensure that the lens 44 is stiff enough to avoid deformation of the lens, which can cause unwanted birefringence, during handling. The thickness 38 of the lens 31 of the first set element is greater than the thickness 50 of the lens of the second lens set element. The thickness of the lens 31 of the first set element may be at least 10% more, more typically at least 25% more. The second lens set element 40 is circular at its periphery, in cross-section (not shown) perpendicular to the optical axis 42, and is of a given second width 52 taken in a direction perpendicular to the second optical axis 42. The second width 52 is greater than the first width 39.

The second lens set element 40 has an outer part 54 and an inner part 56, the inner part 56 including the lens 44. The inner part 56 is equal in width to the first lens set element 30. The first face of the second lens set element 40 has an annular channel 59 centered about the second optical axis 42, the annular channel 59 creating an area of reduced thickness 58 between a base surface of the annular channel and the second face 51 of the second lens set element in a direction parallel to the second optical axis 42. The annular channel 59 has an inner reference surface 60, lying parallel to the second optical axis 42, which is at a given radial distance from the second optical axis 41.

The outer part 54 of the second lens set element 40 has an annular removable part 62 (indicated in Fig. 3) which includes an outer annular flange 64. The annular flange 64 of the removable part 62 has a given thickness 66, the thickness 66 being taken in a direction parallel the second optical axis 42.

Referring now to Fig. 3, in an assembly process the first lens set element 30 is attached to the second lens set element 40. An ultraviolet (UV) radiation curable bonding material (not shown) is applied before assembly to locate between the alignment surface 36 and the inner surface 60; and the spacing surface 37 and the base surface 59. The elements are assembled with high precision, preferably to within a tolerance of 1µm such that the first optical axis 33 and the second optical axis 42 are aligned with each other along an optical lens assembly optical axis 68, the lenses are correctly axially spaced and not tilted with respect to each other, by a two stage process. In a first stage, reference surfaces are used to provide initial positioning. During the first stage the alignment surface 36 interfits with the inner surface 60 by at least nearly making contact therewith at sufficient points of contact to prevent significant lateral displacement of one element relative to the other. The interfitting ensures that the first and second optical axes 33, 42 are at least approximately correctly radially aligned with each other. Additionally, the spacing surface 37 abuts with a portion of the base surface 59. This ensures that an at least approximately correct spacing along the optical axis 68 between the lenses 31, 44 of the first and second lens set elements respectively is achieved.

In the second positioning stage a centering, axial spacing and tilt correction manipulation procedure using an interferometer is conducted to position the first and second elements 30, 40 respectively, the bonding material is cured with the application of UV radiation. The first lens set element 30 is thus rigidly attached to the second lens set element 40 to form the optical lens assembly. The thickness 66 of the annular flange 64 is greater than a thickness 70 along the optical axis 68 of the lens stack comprising the lens of the first lens set element 30 and the lens of the second lens set element 40. This greater thickness 66 of the annular flange 64 enables the flange 64 to protect the optical surfaces of the assembly during handling in the assembly process. In the assembly process the curved surface of the lenses 31, 44 respectively are not touched. During the coating and assembly process, the first lens set element 30 is handled and manipulated using for example vacuum tweezers and the second lens set element 40 is handled and manipulated by applying handling forces to the removable part 62, for example by use of a vacuum manipulator which contacts and grips the second lens set element by contacting the front or rear face of the removable part and applying vacuum forces, and as a further example by placing the front or rear face of the removable part 62 in contact with an assembly mount which applies an upward force to the removable part to hold the weight of the lens set element.

Following the assembly process the removable part 62 of the outer part 54 is detached from the second lens set element 40 along the severing line 72 lying parallel the optical axis 68. The severing line 72 is located at a radius from the optical axis 68 in the annular channel 58. The detachment is conducted either by cutting, using a cutting tool, or by breaking, using the application of pressure only. Note that the area of reduced thickness 58 is designed to facilitate detachment of the severing line. The area 58 is preferably of a thickness of less than 500µm. In the case of detachment by breaking, the thickness is preferably in the region 50-100µm.

Referring now to Fig. 4 and following the detachment of the removable part 62 along the severing line 72 the optical lens assembly 74 results, as well as the now detached annular removable part 62 of the outer part 54 of the second lens set element. Even after detachment of the removable part 62, the remainder of the second lens set element 40 is of a greater width than the first lens set element 30.

Fig. 5 shows an alternative optical lens assembly. Features of this assembly which are similar to the embodiment of the invention are labeled with similar reference numerals and are incremented by 100. The descriptions of these features and the assembly processes used should be taken to apply here also.

In this assembly the second lens set element 140 has no removable part. The second lens set element 140 has an outer part 154 which is of greater width than the first lens element in a direction perpendicular to the optical axis 168 of the lens assembly. The outer part 154 includes an annular protrusion 176 centered about the optical axis 168. The protrusion 176 has a cylindrical inner reference surface 177 parallel the optical axis 168 and an upper surface 179, the upper surface 179 lying perpendicular to the optical axis 168. The outer part 154 has a thickness 183 taken parallel to the optical axis 168, the thickness being between the planar second face 151 and the upper surface 179. This thickness 183 is greater than the minimum thickness 184 of the inner part 156, taken parallel the optical axis 168.

During the coating and assembly process, the first lens set element 130 is handled and manipulated using for example vacuum tweezers and the second lens set element 140 is handled and manipulated by applying handling forces to the outer part 154, for example by use of a vacuum manipulator which contacts and grips the second lens set element by contacting the front or rear face of the outer part and applying vacuum forces, and as a further example by placing the front or rear face of the outer part 154 in contact with an assembly mount which applies an upward force to the outer part 154 to hold the weight of the lens set element. The distance of the outer part 154 from the lens 144 and the feature of the thickness 183 of the outer part 154 being greater than the minimum thickness 184 helps to minimize the propagation of stresses and consequent birefringence effects in the lens 144 when the second lens set element 140 is handled during the coating and assembly process.

The first element 130 has an annular protrusion 135 centered about the optical axis 168. The protrusion 135 has an outer alignment surface 180 which lies parallel to the optical axis 168. During an assembly process of the optical lens assembly the inner surface 177 interfits with the alignment surface 180 to ensure that the first and second optical axes 133, 142 respectively are correctly centered with respect to each other. Also during the assembly process, spacing reference surface 181 on the end of the protrusion 135 abuts with a portion of a flat annular surface 182 of the second lens set element adjacent the curved surface of the lens 146. This abutting of surfaces ensures a correct axial spacing along the optical axis 168 between the lenses 131, 144 of the first and second lens set elements respectively.

In a similar manner to the embodiment of the invention, a UV curable bonding material is applied between the inner surface 177 and the alignment surface 180, and the second spacing surface 181 and the portion of the annular surface 182. Following a two stage positioning procedure including a centering, axial spacing and tilt correction manipulation procedure using an interferometer, the curable bonding material is cured with the application of UV radiation such that the first lens set element 130 is rigidly bonded to the second lens set element 140 to form the optical lens assembly.

Although in this assembly the outer part of the second lens set element does not include a removable part, the extra width of the outer part 154 on the second lens set element enables the second lens element to be handled and manipulated more reliably, and reduces the propagation of stresses and consequent birefringence effects in the lens 144 when the second lens set element is handled during the coating and assembly process.

The above are intended to be illustrative examples. Further embodiments of the invention are envisaged. In embodiments of the present invention, the second lens set element has an outer part of greater width than the width of the first set element. Generally, the width of the outer part is preferably at least 5% more than the width of the first set element. Where the outer part includes a removable part, the width of the outer part is preferably at least 10% more than the width of the first set element.

In a further embodiment of the present invention it is envisaged that in addition to the second lens set element having a removable part of an outer part, the first lens set element may also have a similar removable part to improve handling of the first lens set element during an assembly process. Following the assembly process the removable parts of both the first and second lens set elements may be detached.

In further embodiments of the present invention the outer part is not in the form of an annular flange. Differently shaped forms of the outer part are envisaged such that handling of the second lens set element is facilitated and/or reduction of propagation of stress and/or protection of the optical lens assembly is achieved. Thus, whilst in the above-described assemblies the width of the outer part is greater than the maximum width of the first lens set element in all directions perpendicular to the optical axis, in alternative embodiments, if for example the outer part does not extend entirely around the periphery of the second lens set element, the minimum width of the second lens set element may be smaller than a width of the first lens set element, in directions perpendicular to the optical axis. Further alternatively, the first lens set element may for example also include an outer part which extends for example to only one side thereof, such that the maximum width of the second lens element may be less than the maximum width of the first lens set element, in directions perpendicular to the optical axis. However, in this embodiment of the invention the outer part of the second set element has a maximum width which is greater than the minimum width of the first lens set element, in directions perpendicular to the optical axis.

In the above a two stage relative positioning procedure is followed to ensure correct relative positioning of the two lens set elements; in an alternative procedure, only one stage of positioning may be carried out, such as only using abutment of the reference surfaces as described to provide correct positioning; in this case positioning using an interferometer is not required.

In the above both the first lens set element and the second lens set element are integral components formed of injection-molded plastic, for example a cyclic olefin copolymer (COC) such a Zeonex™ or of a PMMA polymer. It is envisaged that either one of these lenses may alternatively be formed of glass and the other lens is formed of plastic or that both lenses are formed of glass. In the case where a lens is glass it is generally not practical for the whole lens set element, within which the lens is included, to be formed entirely of glass. In this case the glass lens is bonded in position to the remainder of the lens set element, which may be formed for example of plastic. In one example wherein at least the lens of the first lens set element is formed of glass, the lens is bonded within a tubular component to provide the first lens set element.

In the above both the first lens set element and the second lens set element have a lens which is plano-convex. However, other forms of lens may be used, for example convex-convex, plano-concave and convex-concave.

In embodiments of the present invention a removable part of an outer part of a second lens set element is detached by cutting or breaking along a severing line in an annular channel of the outer part. It is envisaged that the location of the outer part at which the removable part is detached may not be a channel feature, but may for example include one or more strips connecting the removable part to the remainder. Furthermore the removable part is not restricted to being annular in shape, but may be of other forms depending on the handling and protective requirements of the optical lens assembly.

Equivalents and modifications not described above may also be employed without departing from the scope of the invention, which is defined in the accompanying claims.

## Claims

1. An optical lens set comprising:
a) a first lens set element having a first optical axis and including a first lens having a first curved lens surface having a first entrance pupil with a first diameter,
wherein said first lens set element is of a first width in a direction perpendicular to said first optical axis; and
b) a second lens set element having a second optical axis and including a second lens having a second curved lens surface having a second entrance pupil with a different, second diameter which is smaller than said first diameter, said second lens set element having an inner part and an outer part arranged in a direction perpendicular to said second optical axis, said inner part including said second lens, wherein said first and second lens set elements are adapted to form a lens assembly including said first and second lenses,
**characterized in that** said outer part includes a removable part arranged to be removed during an assembly process, wherein said removable part extends to a second width in a direction perpendicular to said second optical axis, which second width is greater than said first width.

2. An optical lens set according to claim 1, wherein the thickness of said first lens along said first optical axis is greater than the thickness of said second lens along said second optical axis.

3. An optical lens set according to claim 1 or 2, wherein a ratio of the thickness of said second lens along said second optical axis divided by said second diameter is at least 0.5.

4. An optical lens set according to any preceding claim, wherein said first width is the maximum width of said first lens set element perpendicular to said first optical axis and said second width is the maximum width of said second lens set element perpendicular to said second optical axis.

5. An optical lens set according to any preceding claim, wherein said first or second set element has a protrusion which is shaped to interfit with a surface of said second or first set element, respectively.

6. An optical lens set according to any preceding claim, wherein said outer part comprises an area of reduced thickness in a direction parallel to said second optical axis, and wherein said removable part is detachable by severing said outer part in said area of reduced thickness.

7. An optical lens set according to any preceding claim, wherein said inner part is attachable to said first optical element to form a lens stack, and wherein the thickness of said outer part in a direction parallel to said second optical axis is greater than the maximum thickness of the lens stack when so formed.

8. An optical lens assembly comprising an optical lens set according to any preceding claim, wherein said first and second lens set element are mutually attached.

9. An optical scanning device for scanning optical record carriers, the device including an optical lens assembly according to claim 8.

10. A method of assembling an optical lens set comprising:
a) providing a first lens set element having a first optical axis and including a first lens having a first curved lens surface having a first entrance pupil with a first diameter, wherein said first lens set element is of a first width in a direction perpendicular to said first optical axis;
b) providing a second lens set element having a second optical axis and including a second lens having a curved lens surface having a second entrance pupil with a different, second diameter which is smaller than said first diameter, wherein said second lens set element has an inner part and an outer part arranged in a direction perpendicular to said second optical axis, said inner part including said second lens; and
c) attaching said first lens set element to said second lens set element by bonding an attachment surface of said first lens set element to an attachment surface of said second lens set element so that said first and second optical axes are aligned with each other,
**characterized in that** said outer part includes a removable part arranged to be removed during an assembly process, wherein said removable part extends to a second width in a direction perpendicular to said second optical axis, which second width is greater than said first width, and wherein said method further comprises:
d) handling said second lens set element to apply handling forces to said removable part; and
e) removing said removable part before completing said optical lens set.

## Patentansprüche

1. Optische Linsenbaugruppe, die Folgendes umfasst:
a) ein erstes Linsensatzelement mit einer ersten optischen Achse und mit einer ersten Linse mit einer ersten gekrümmten Linsenoberfläche mit einer ersten Eingangspupille mit einem ersten Durchmesser,
wobei das genannte erste Linsensatzelement eine erste Breite in einer Richtung senkrecht zu der ersten optischen Achse hat; und
b) ein zweites Linsensatzelement mit einer zweiten optischen Achse und mit einer zweiten Linse mit einer zweiten gekrümmten Linsenoberfläche mit einer zweiten Eingangspupille mit einem anderen, zweiten Durchmesser, der kleiner ist als der genannte erste Durchmesser, wobei das genannte zweite Linsensatzelement einen inneren Teil und einen äußeren Teil aufweist, vorgesehen in einer Richtung senkrecht zu der genannten zweiten optischen Achse, wobei der genannte innere Teil die genannte zweite Linse umfasst, wobei das genannte erste und zweite Linsensatzelement dazu vorgesehen sind, eine Linsenbaugruppe mit der ersten und der zweiten Linse zu bilden,
**dadurch gekennzeichnet, dass** der genannte äußere Teil einen entfernbaren Teil aufweist, vorgesehen um während eines Zusammenbauprozesses entfernt zu werden, wobei der genannte entfernbare Teil sich in einer zweiten Breite in einer Richtung senkrecht zu der genannten zweiten optischen Achse erstreckt, wobei die genannte zweite Breite größer ist als die genannte erste Breite.

2. Optischer Linsensatz nach Anspruch 1, wobei die Dicke der genannten ersten Linse längs der genannten ersten optischen Achse größer ist als die Dicke der genannten zweiten Linse längs der genannten zweiten optischen Achse.

3. Optischer Linsensatz nach Anspruch 1 oder 2, wobei ein Verhältnis der Dicke der genannten zweiten Linse längs der genannten zweiten optischen Achse geteilt durch den genannten zweiten Durchmesser wenigstens 0,5 beträgt.

4. Optischer Linsensatz nach einem der vorstehenden Ansprüche, wobei die genannte erste Breite die maximale Breite des genannten ersten Linsensatzelementes senkrecht zu der genannten ersten optischen Achse ist und die genannte zweite Breite die maximale Breite des genannten zweiten Linsensatzelementes senkrecht zu der genannten zweiten optischen Achse ist.

5. Optischer Linsensatz nach einem der vorstehenden Ansprüche, wobei das genannte erste oder zweite Satzelement einen Vorsprung hat, der derart geformt ist, dass er mit einer Oberfläche des genannten zweiten bzw. ersten Satzelementes zusammenarbeitet.

6. Optischer Linsensatz nach einem der vorstehenden Ansprüche, wobei der genannte äußere Teil ein Gebiet reduzierter Dicke in einer Richtung parallel zu der genannten zweiten optischen Achse aufweist, und wobei der genannte entfernbare Teil durch Abtrennung des genannten äußeren Teils in dem Gebiet reduzierter Dicke abnehmbar ist.

7. Optischer Linsensatz nach einem der vorstehenden Ansprüche, wobei der genannte innere Teil an das genannte erste optische Element befestigbar ist, und zwar zum Bilden eines Linsenstapels, und wobei die Dicke des genannten äußeren Teils in einer Richtung parallel zu der genannten zweiten optischen Achse größer ist als die maximale Dicke des Linsenstapels, wenn auf diese Art und Weise gebildet.

8. Optische Linsenbaugruppe mit einem optischen Linsensatz nach einem der vorstehenden Ansprüche, wobei das genannte erste und zweite Linsensatzelement gegenseitig befestigt sind.

9. Optische Abtastvorrichtung zum Abtasten optischer Aufzeichnungsträger,
wobei die Vorrichtung einen optische Linsenbaugruppe nach Anspruch 8 aufweist.

10. Verfahren zum Zusammenbauen eines optischen Linsensatzes, wobei dieses Verfahren die nachfolgenden Verfahrensschritte umfasst:
a) das Schaffen eines ersten Linsensatzelementes mit einer ersten optischen Achse und mit einer ersten Linse mit einer ersten gekrümmten Linsenoberfläche mit einer ersten Eingangspupille mit einem ersten Durchmesser, wobei das genannte erste Linsensatzelement eine erste Breite in einer Richtung senkrecht zu der ersten optischen Achse hat; und
b) das Schaffen eines zweiten Linsensatzelementes mit einer zweiten optischen Achse und mit einer zweiten Linse mit einer zweiten gekrümmten Linsenoberfläche mit einer zweiten Eingangspupille mit einem anderen, zweiten Durchmesser, der kleiner ist als der genannte erste Durchmesser, wobei das genannte zweite Linsensatzelement einen inneren Teil und einen äußeren Teil aufweist, vorgesehen in einer Richtung senkrecht zu der genannten zweiten optischen Achse, wobei der genannte innere Teil die genannte zweite Linse umfasst,
c) das Befestigen des genannten ersten Linsensatzelementes an das genannte zweite Linsensatzelement, indem eine Befestigungsfläche der genannten ersten Linsensatzelementes an eine Befestigungsfläche des genannten zweiten Linsensatzelementes befestigt wird, so dass die genannte erste und zweite optische Achse zueinander ausgerichtet werden,
**dadurch gekennzeichnet, dass** der genannte äußere Teil einen entfernbaren Teil aufweist, vorgesehen um während eines Zusammenbauprozesses entfernt zu werden, wobei der genannte entfernbare Teil sich in einer zweiten Breite in einer Richtung senkrecht zu der genannten zweiten optischen Achse erstreckt, wobei die genannte zweite Breite größer ist als die genannte erste Breite, und wobei das genannte Verfahren weiterhin den folgenden Verfahrensschritt umfasst:
d) das Handhaben des genannten zweiten Linsensatzelementes zum Anwenden von Handhabungskräften auf den entfernbaren Teil; und
e) das Entfernen des genannten entfernbaren Teil, und zwar vor Vervollständigung des genannten optischen Linsensatzes.

## Revendications

1. Jeu de lentilles optiques comprenant :
a) un premier élément de jeu de lentilles ayant un premier axe optique et comprenant une première lentille ayant une première surface de lentille incurvée ayant une première pupille d'entrée avec un premier diamètre,
dans lequel ledit premier élément de jeu de lentilles est d'une première largeur dans une direction perpendiculaire au dit premier axe optique ; et
b) un deuxième élément de jeu de lentilles ayant un deuxième axe optique et comprenant une deuxième lentille ayant une deuxième surface de lentille incurvée ayant une deuxième pupille d'entrée avec un deuxième diamètre différent qui est inférieur au dit premier diamètre, ledit deuxième élément de jeu de lentilles ayant une partie intérieure et une partie extérieure agencées dans une direction perpendiculaire au dit deuxième axe optique, ladite partie intérieure comprenant ladite deuxième lentille, dans lequel lesdits premier et deuxième éléments de jeu de lentilles sont aptes à former un ensemble de lentilles comprenant lesdites première et deuxième lentilles,
**caractérisé en ce que** ladite partie extérieure comprend une partie amovible agencée pour être enlevée au cours d'un processus d'assemblage, dans lequel ladite partie amovible s'étend sur une deuxième largeur dans une direction perpendiculaire au dit deuxième axe optique, ladite deuxième largeur est supérieure à ladite première largeur.

2. Jeu de lentilles optiques selon la revendication 1, dans lequel l'épaisseur de ladite première lentille le long dudit premier axe optique est supérieure à l'épaisseur de ladite deuxième lentille le long dudit deuxième axe optique.

3. Jeu de lentilles optiques selon la revendication 1 ou 2, dans lequel un rapport de l'épaisseur de ladite deuxième lentille le long dudit deuxième axe optique divisé par ledit deuxième diamètre est d'au moins 0,5.

4. Jeu de lentilles optiques selon l'une quelconque des revendications précédentes, dans lequel ladite première largeur est la largeur maximale dudit premier élément de jeu de lentilles perpendiculaire au dit premier axe optique et ladite deuxième largeur est la largeur maximale dudit deuxième élément de jeu de lentilles perpendiculaire au dit deuxième axe optique.

5. Jeu de lentilles optiques selon l'une quelconque des revendications précédentes, dans lequel ledit premier ou deuxième élément de jeu de lentilles a une protubérance qui est formée pour correspondre à une surface dudit deuxième ou premier élément de jeu de lentilles respectivement.

6. Jeu de lentilles optiques selon l'une quelconque des revendications précédentes, dans lequel ladite partie extérieure comprend une zone d'épaisseur réduite dans une direction parallèle au dit deuxième axe optique, et dans lequel ladite partie amovible est détachable en séparant ladite partie extérieure dans ladite zone d'épaisseur réduite.

7. Jeu de lentilles optiques selon l'une quelconque des revendications précédentes, dans lequel ladite partie intérieure est attachable au dit premier élément optique pour former une pile de lentilles, et dans lequel l'épaisseur de ladite partie extérieure dans une direction parallèle au dit deuxième axe optique est supérieure à l'épaisseur maximale de la pile de lentilles lorsqu'elle est ainsi formée.

8. Ensemble de lentilles optiques comprenant un jeu de lentilles optiques selon l'une quelconque des revendications précédentes, dans lequel lesdits premier et deuxième éléments de jeu de lentilles sont mutuellement attachés.

9. Dispositif de balayage optique pour balayer des porteurs d'enregistrements optiques, le dispositif comprenant un ensemble de lentilles optiques selon la revendication 8.

10. Procédé d'assemblage d'un jeu de lentilles optiques comprenant les étapes consistant à :
a) fournir un premier élément de jeu de lentilles ayant un premier axe optique et comprenant une première lentille ayant une première surface de lentille incurvée ayant une première pupille d'entrée avec un premier diamètre, dans lequel ledit premier élément de jeu de lentilles est d'une première largeur dans une direction perpendiculaire au dit premier axe optique ;
b) fournir un deuxième élément de jeu de lentilles ayant un deuxième axe optique et comprenant une deuxième lentille ayant une deuxième surface de lentille incurvée ayant une deuxième pupille d'entrée avec un deuxième diamètre différent qui est inférieur au dit premier diamètre, ledit deuxième élément de jeu de lentilles ayant une partie intérieure et une partie extérieure agencées dans une direction perpendiculaire au dit deuxième axe optique, ladite partie intérieure comprenant ladite deuxième lentille ; et
c) attacher ledit premier élément de jeu de lentilles au dit deuxième élément de jeu de lentilles en liant une surface d'attachement dudit premier élément de jeu de lentilles à une surface d'attachement dudit deuxième élément de jeu de lentilles de sorte que lesdits premier et deuxième axes optiques soient alignés l'un par rapport à l'autre,
**caractérisé en ce que** ladite partie extérieure comprend une partie amovible agencée pour être enlevée au cours d'un processus d'assemblage, dans lequel ladite partie amovible s'étend sur une deuxième largeur dans une direction perpendiculaire au dit deuxième axe optique, ladite deuxième largeur est supérieure à ladite première largeur, et dans lequel ledit procédé comprend en outre les étapes consistant à :
d) manipuler ledit deuxième élément de jeu de lentilles pour appliquer des forces de manipulation à ladite partie amovible ; et
e) enlever ladite partie amovible avant de terminer ledit jeu de lentilles optiques.
